# EUROPEAN PATENT APPLICATION

(11) **EP 0 994 333 A1**
(43) Date of publication of application: **19.04.2000**
(21) Application number: 98830618.9
(22) Date of filing: 16.10.1998
(51) Int. Cl.: G01F 11/02

(54) **Volumetric metering device for fluid products in particular of the alimentary type**

(71) Applicant: Comas S.p.a., 36030 Pievebelvicino (Vicenza) (IT)
(72) Inventor: Visona, Renato, 36015 Schio (Vicenza) (IT)
(74) Representative: Lanzoni, Luciano

(57) **Abstract**

The present invention relates to a volumetric metering device for fluid products comprising: an adjustable-volume metering chamber (4) operationally associated with shut-off means (8) designed to connect said chamber to a reservoir (5) containing the fluid product to be metered and to an outlet port (2). Actuator means (10) are also provided, being able to move a piston (9) arranged in a sealingly slidable manner inside the metering chamber (4) so as to perform an intake stroke, during which a measured quantity of alimentary fluid is introduced inside the metering chamber (4), and a compression stroke, during which the alimentary fluid contained inside said metering chamber (4) flows out through the outlet port (2). The metering chamber (4) is provided with a rear chamber (11) capable of receiving the piston (9) during a step involving washing of the metering device (1). For this purpose, the piston (9) is moved by actuator means (10) along an additional over-travel section forming an extension of its intake stroke. The rear chamber (11) may in turn be connected by means of at least one connection point (12) to an automatic flushing plant so as to cause circulation of a flushing fluid through the shut-off means (8) and the metering chamber (4). Advantageously, an injector (14) which is connected to the automatic flushing plant is mounted on the reservoir (5).

## Description

The present invention relates to a volumetric metering device for fluid products, in particular of the alimentary type.

The filling device in question is intended to be used above all in the food industry for metering precise quantities of fluids and then conveying them to suitable user appliances via an outlet port.

At present, in accordance with the known art, several volumetric metering devices provided with an adjustable-volume metering chamber communicating with a reservoir containing the fluid product to be metered and with an outlet port for the fluid are known. The introduction of the fluid into the metering chamber and the discharging thereof from the outlet port are regulated by shut-off means controlled by a programmable logic unit.

Generally, the shut-off means simply consist of a three-way valve which is designed to connect the metering chamber alternately to the reservoir for supplying of the liquid and to the outlet port for discharging thereof from the metering chamber to a user appliance associated therewith.

In practice, the volumetric metering devices of the known type mentioned above have some operational drawbacks which have not yet been solved.

As is known, the volumetric metering devices used in the food industry require frequent flushing operations in order to clean all the parts which come into contact with the fluid to be metered. This is necessary in order to keep under control as far as possible the level of bacteria which may form inside the metering devices.

At present the flushing operations are performed by disassembling the metering devices so as to be able to perform cleaning of the individual parts which have come into contact with the alimentary fluid, and in particular in order to perform cleaning of the metering chamber and the shut-off means.

As is known, automatic flushing plants which may be operationally associated with the machines used in the food industry are known, said plants being able to cause the circulation, inside said machines, of the flushing fluid (mainly consisting of suitable aqueous solutions) in accordance with precise washing cycles so as to keep always under control the level of bacteria which may develop inside parts of the machines affected by the alimentary fluids.

These flushing plants at present cannot be used in association with volumetric metering devices in an advantageous manner since they would not allow thorough cleaning of all the parts. This is due to the specific mechanical designs of the volumetric metering devices which are currently available on the market and which do not allow the flushing fluid to cleanse all the parts inside which the alimentary fluid may be deposited.

The present system for flushing volumetric devices which envisages the disassembly and the cleaning of all the individual parts is obviously somewhat laborious and economically disadvantageous and such that it has a negative effect on the production outputs of the plants in the food industry, on which it is used.

The main object of the present invention is therefore that of eliminating the drawbacks of the art known hitherto by providing a volumetric metering device for fluid products, in particular of the alimentary type, which may be operationally associated with an automatic flushing plant so as to allow cleaning of all its parts which come into contact with alimentary fluids, while keeping the bacterial level thereof under control.

A further object of the present invention is that of providing a volumetric metering device which is constructionally simple and operationally entirely reliable and which allows rapid and simple cleaning of all its parts which are wetted by the alimentary fluids.

These and other objects are all achieved by the volumetric metering device for fluid products, in particular of the alimentary type in question, which comprises an adjustable-volume metering chamber which is operationally associated with shut-off means which are designed to connect said chamber to a reservoir containing the fluid product to be metered, by means of a first pipe, and to an outlet port, by means of a second pipe. Actuator means are also provided, said means being able to move a piston arranged in a sealingly slidable manner inside the metering chamber so as to perform an intake stroke, during which a measured quantity of alimentary fluid is introduced inside the metering chamber, and a compression stroke, during which the alimentary fluid contained inside the metering chamber flows out through the outlet port. The metering chamber is provided with a rear chamber which is able to receive the piston in a washing position during a washing step of the metering device. For this purpose, the piston is moved by actuator means along an additional over-travel section forming an extension of the intake stroke. The rear chamber is connected to an automatic flushing plant so as to provide the circulation of a flushing fluid through the shut-off means and the metering chamber (4).

In accordance with a further characteristic feature of the invention, the volumetric metering device is provided with shut-off means which have obturator elements with an open configuration, i.e. devoid of corners inside which the alimentary fluid may collect and able to be easily reached at every point by the flushing fluid.

The technical features of the invention, in accordance with the abovementioned objects, may be clearly understood from the contents of the claims indicated below and the advantages thereof will emerge more clearly from the detailed description which follows, with reference to the accompanying drawings which show a purely exemplary and non-limiting embodiment, in which:
- Figure 1 shows schematically a side view of a first example of embodiment of the volumetric metering device according to the present invention, with some parts sectioned and others removed so that other parts thereof are more clearly visible;
- Figure 2 shows schematically a side view of a second example of embodiment of the volumetric metering device in question, with some parts sectioned and others removed so that other parts thereof are more clearly visible;
- Figure 3 shows schematically the example of the metering device according to Fig. 2 with an obturator in a different closing position;
- Figure 4 shows schematically a side view of a third example of embodiment of the volumetric metering device in question, with some parts sectioned and others removed so that other parts thereof are more clearly visible;

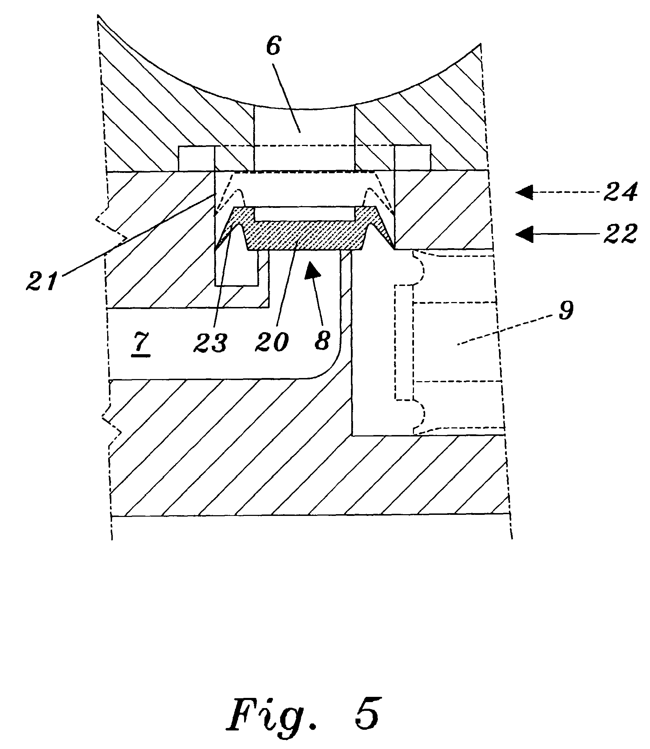

- Figure 5 shows schematically an enlarged detail of Fig. 4 with an obturator arranged in two different closing positions.

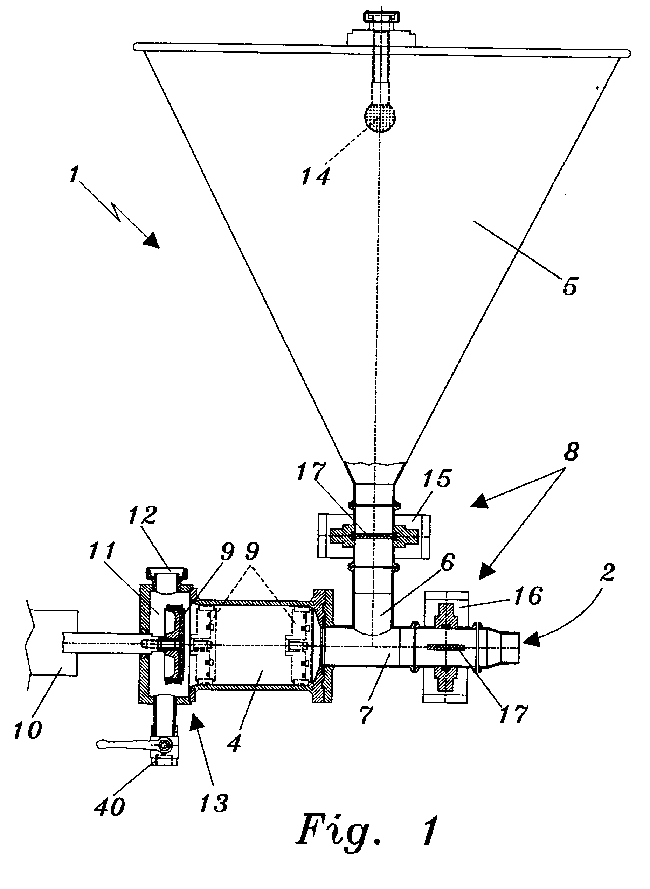

With reference to the accompanying drawings of Figs. 1, 2, 3 and 4, each example of embodiment of a volumetric metering device according to the present invention has been denoted in its entirety by 1.

Below identical parts of the three different examples of embodiment of the metering device shown in the accompanying figures will be indicated by the same numbers.

Each volumetric metering device 1 to which the examples of embodiment of the accompanying figures refer is of the type which may be used in the food industry in order to measure metered quantities of a fluid food product and convey them to a user appliance via an outlet port 2.

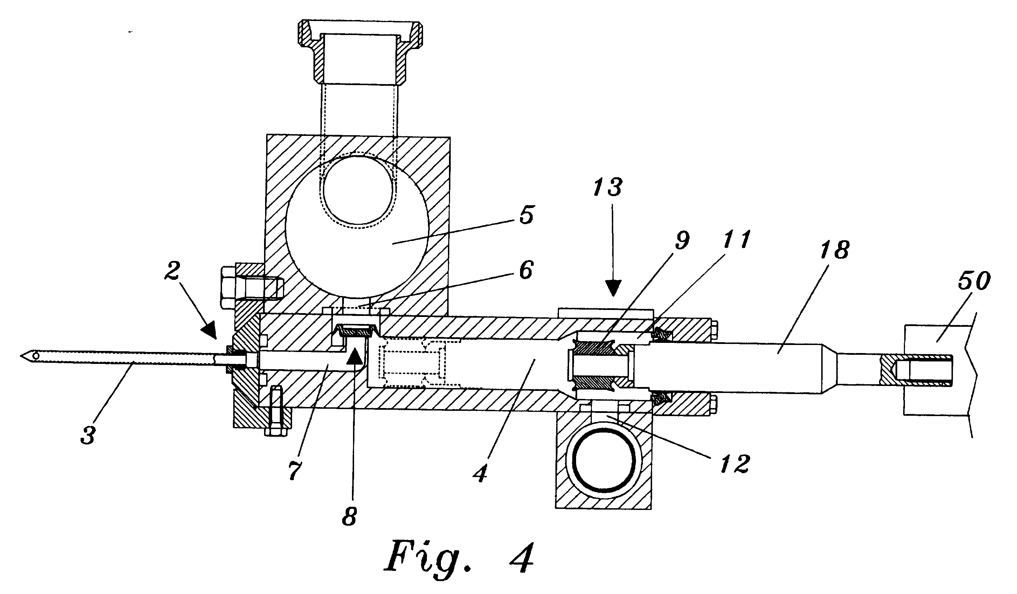

In the example according to Fig. 4, the user appliance consists purely by way of example of a syringe 3 which can be used to inject a stuffing substance inside a food product.

Each volumetric metering device 1 is provided with an adjustable-volume metering chamber 4 which is connected to a reservoir 5 containing the fluid product to be metered, by means of a first pipe 6, and to the outlet port 2, by means of second pipe 7.

The two pipes 6 and 7 have, associated with them, shut-off means 8 which are controlled by a programmable logic unit which is able to connect the metering chamber 4, in accordance with programmed operating steps, alternately to the reservoir 5 and to the outlet port 2 for the alimentary fluid.

The metering chamber 4 has, arranged inside it in a sealingly slidable manner, a piston 9 which is moved by a linear actuator 10 so as to perform an intake stroke and a compression stroke. During the intake stroke the shut-off means 8 connect the metering chamber 4 to the reservoir 5 via the first pipe 6, so as to allow the introduction, inside it, of a measured quantity of alimentary fluid. During the compression stroke the shut-off means 8 connect the metering chamber 4 to the second pipe 7 so as to allow the fluid contained inside the metering chamber 4 to flow out through the outlet port 2.

The metering chamber 4 is provided with a rear chamber 11 which is capable of receiving the piston 9 when the latter is displaced by the linear actuator 10 along an additional over-travel section forming an extension of the intake stroke.

During a planned washing step, the rear chamber 11 may be connected in a removable manner by means of a connection point 12 to an automatic flushing plant (not shown in the accompanying figures) which introduces inside the metering device 1 flushing fluids in accordance with programmed washing cycles.

In practice, operationally speaking, during the washing step, the rear chamber 11 is connected up to the automatic flushing plant, the user appliance 3 is generally disconnected from the metering device 1 and in its place a pipe for the return flow of the flushing fluid is connected. During this step, the piston 9 is arranged inside the rear chamber 11 (in the position indicated by 13 in Figures 1 to 4) so as to allow the fluid to wet all its parts and penetrate inside the metering chamber 4.

For this purpose, the rear chamber 11 has dimensions such as not to allow the piston 9 to have a sealing action along its walls.

It is obviously also possible to envisage combined movements of the piston 9 and the shut-off means 8 so as to allow more reliable washing of all the parts of the volumetric metering device 1.

Advantageously, it is also envisaged installing an injector 14 inside the reservoir 5 so as to ensure complete circulation of the flushing fluid through the first and the second pipes 6 and 7, through the shut-off means 8, through the reservoir 5 and through the metering chamber 4.

A further measure which is operationally very useful consists in installing a discharge tap 40 in the bottommost part of the rear chamber 11 so as to allow the evacuation of all the flushing fluid from the washing chamber 4 once the step involving washing of the metering device 1 has been completed.

In accordance with the example of embodiment according to Fig. 1, the shut-off means 8 consist of two separate valves 15 and 16, with a first one being arranged on the first pipe 6 and the second one arranged on the second pipe 7.

Both are provided with an obturator 17 which is arranged inside the corresponding pipes 6 and 7 and has a configuration devoid of corners or cracks inside which the alimentary fluid may collect. Therefore, both in this example of embodiment and in those which will be illustrated below, the obturators have open surfaces, this definition being understood as meaning surfaces which are substantially devoid of corners inside which the alimentary fluid may collect and which can therefore always be easily reached by the flushing fluid.

Advantageously the two valves 15 and 16 may therefore consist of butterfly valves.

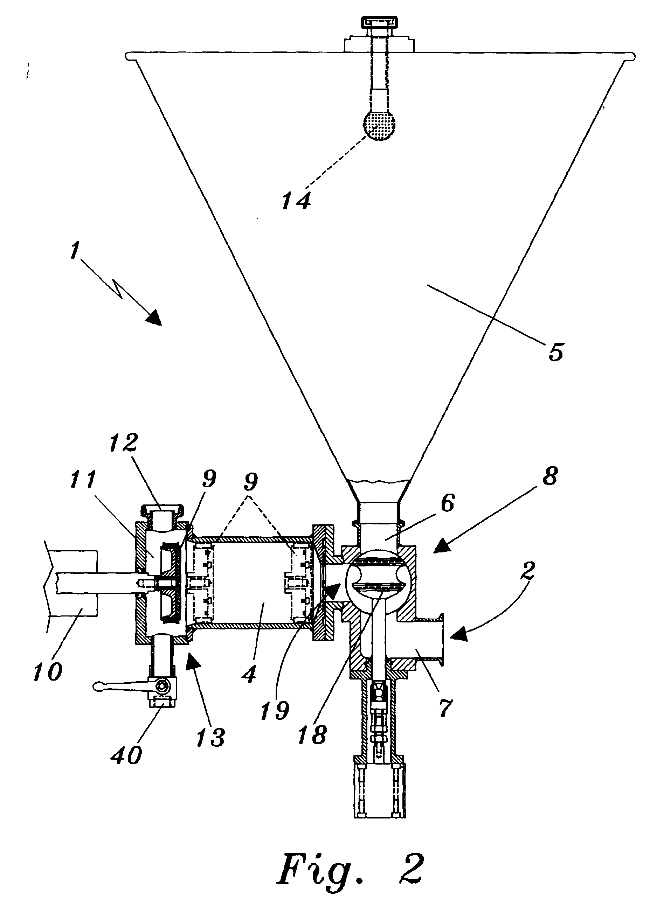

In accordance with the example of embodiment shown in Fig. 2, the shut-off means 8 consist of an axial obturator valve 18 which is arranged in a zone for connection of the first and the second pipes 6 and 7.

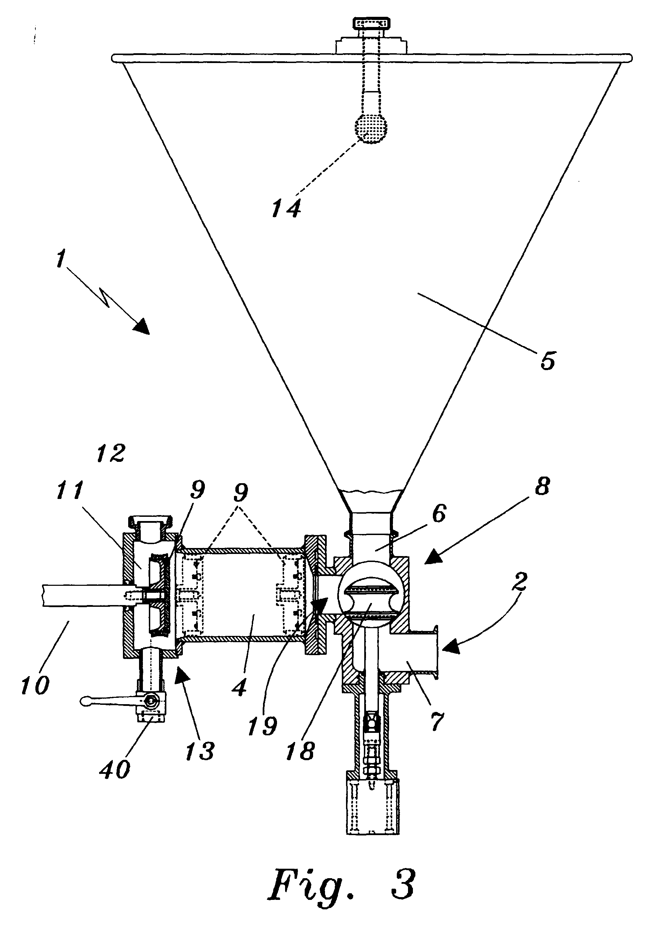

The axial obturator 18 is actuated by moving means (consisting for example in the case of the embodiment according to Fig. 4 of a pneumatic jack 50) between a closed position of the first pipe 6 (see Fig. 2) and a closed position of the second pipe 7 (see Fig. 3).

In accordance with the last example of embodiment illustrated in Fig. 3, the shut-off means 8 consist of a free membrane-type valve 20 operationally associated with a seat 21 formed in the zone 19 for connection between the first and second pipes 6 and 7.

The reservoir 5, the connection point of which to the metering device 1 is only shown in Fig. 4, may consist either of a pressurised chamber or of an open chamber.

In the first case the pressure exerted by the fluid has the effect of promoting filling of the metering chamber 4 during the intake stroke of the piston 9.

The membrane 20 moves owing to the difference in pressure between a first position 2, in which the alimentary fluid is allowed to flow out from the reservoir 5 to the metering chamber 4 by means of deformation of its elastically resilient peripheral rim 23, and a second position 24, in which the fluid is able to flow out from the metering chamber 4 towards the outlet port 2 owing to the sealing action exerted by the peripheral rim 23 on the seat 21.

## Claims

1. Volumetric metering device for fluid products, in particular of the alimentary type, comprising: an adjustable-volume metering chamber (4) operationally associated with shut-off means (8) controlled by a programmable logic unit and designed to connect said chamber, in accordance with programmed operating steps, to a reservoir (5) containing the fluid product to be metered, by means of a first pipe (6), and to an outlet port (2), by means of a second pipe (7); actuator means (10) controlled by said programmable logic unit and designed to move a piston (9) arranged in a sealingly slidable manner inside said metering chamber (4) so as to perform an intake stroke, during which said shut-off means (8) connect said metering chamber (4) to said reservoir (5) so as to allow the introduction, inside said metering chamber (4), of a measured quantity of said alimentary fluid, and a compression stroke, during which said shut-off means (8) connect said metering chamber (4) to said second pipe (7) so as to allow the fluid contained inside said metering chamber (4) to flow out through said outlet port (2); characterized in that said metering chamber (4) is provided with a rear chamber (11) capable of receiving said piston (9) in a washing position (13) when the latter, during a step involving washing of said metering device (1), is moved by said actuator means (10) along an additional over-travel section forming an extension of said intake stroke, said rear chamber (11) being able to be connected by means of at least connection point (12) to an automatic flushing plant causing circulation of a flushing fluid through at least said first and second pipes (6, 7), said shut-off means (8) and said metering chamber (4).

2. Volumetric metering device according to Claim 1, characterized in that it comprises at least one injector (14) connected to said automatic flushing plant and designed to introduce said flushing fluid inside said reservoir (5), allowing the circulation of said flushing fluid through said reservoir (5) itself, said first and second pipes (6, 7), said shut-off means (8) and said metering chamber (4).

3. Volumetric metering device according to Claim 1, characterized in that said shut-off means (8) consist of two separate valves (15, 16), a first one being arranged on said first pipe (6) and a second one (16) being arranged on said second pipe (7), both having at least one obturator element (17) arranged inside the corresponding pipes (6) and (7) and having an open configuration which can be easily reached by said flushing fluid.

4. Volumetric metering device according to Claim 3, characterized in that said two valves (15, 16) consist of butterfly valves.

5. Volumetric metering device according to Claim 1, characterized in that said shut-off means (8) consist of an axial obturator valve (18) which is arranged in a zone (19) for connection between said first and said second pipes (6, 7) and can be movably actuated by moving means (50) between a closed position of said first pipe (6) and a closed position of said second pipe (7).

6. Volumetric metering device according to Claim 1, characterized in that said shut-off means (8) consist of a free membrane-type valve (20) operationally associated with a seat (21) formed in a zone (19) for connecting said first and said second pipes (6, 7), said membrane (20) being movable owing to the differences in pressure between a first position (22), in which said alimentary fluid is able to flow out from said reservoir to said metering chamber (4) by means of deformation of an elastically resilient part thereof (23), and a second position (24), in which said alimentary fluid is able to flow out from said metering chamber (4) towards said outlet port (2), owing to the sealing action exerted by said elastically resilient part (23) on the seat (21).

7. Volumetric metering device according to Claim 1, characterized in that it comprises a discharge tap (40) mounted in a bottom position of said rear chamber (11) so as to allow evacuation of all the flushing fluid from said metering chamber (4) once the step of washing of said volumetric metering device (1) has been completed.
